# EUROPEAN PATENT SPECIFICATION

(11) **EP 1 818 367 B1**
(45) Date of publication and mention of the grant of the patent: **15.07.2009**
(21) Application number: 07002841.0
(22) Date of filing: 09.02.2007
(51) Int. Cl.: C08L 71/00

(54) **Curable fluoropolyether compositions and integral molded resin/rubber articles**
Härtbare Fluorpolyether-Zusammensetzungen und in einem Stück geformete Harz/Gummi-Produkte
Compositions en fluoropolyéther durcissable et articles en caoutchouc/résine moulés intégralement

(30) Priority: 13.02.2006 JP 2006035782
(43) Date of publication of application: 15.08.2007
(73) Proprietor: Shin-Etsu Chemical Co., Ltd., Tokyo (JP)
(72) Inventor: Yamaguchi, Hiromasa, Annaka-shi Gunma-ken (JP); Shiono, Mikio, Annaka-shi Gunma-ken (JP)
(74) Representative: TER MEER - STEINMEISTER & PARTNER GbR

(56) References cited:
- EP-A- 1 422 260
- EP-A- 1 555 297
- EP-A1- 1 389 632

## Description

### FIELD OF THE INVENTION

This invention relates to curable fluoropolyether compositions which tightly bond to organic resins, especially thermoplastic resins under short-term curing conditions and which themselves are releasable from rubber-shaping metal members, typically metal molds in a practically acceptable manner. The invention also relates to integral molded resin/rubber articles obtained by using the curable fluoropolyether compositions.

### BACKGROUND ART

Curable fluoroelastomer compositions utilizing addition reaction of alkenyl groups and hydrosilyl groups are known in the art. Compositions of this type can be endowed with self adhesion by adding as a third component an organopolysiloxane having hydrosilyl groups and epoxy and/or trialkoxysilyl groups as disclosed in Japanese Patent No. 3239717. The composition can be cured by brief heating, and the cured product has satisfactory properties including solvent resistance, chemical resistance, heat resistance, low-temperature properties, low-moisture-permeability, and electrical properties. It is useful in an adhesion application in various industrial fields where such properties are required.

Although compositions of this type are satisfactorily adherent to metals including aluminum, stainless steel and iron, and general-purpose plastics including epoxy resins, phenolic resins and polyester resins, they are insufficiently adherent to engineering plastics such as polyphenylene sulfide (PPS) and polybutylene terephthalate (PBT). They are not applicable where engineering plastics are used.

One method of combining an organic resin with fluoropolyether rubber is physical engagement of fluoropolyether rubber with organic resin into an integral assembly. This assembly can be disengaged by physical forces. Another method is by coating a self-adhesive fluoropolyether rubber composition to a molded resin and curing thereto. Since integral parts of resin and fluoropolyether rubber are often formed using a mold, there arises a serious problem that the fluoropolyether rubber itself adheres to the mold.

Japanese Patent No. 3324166 corresponding to USP 5,405,896 discloses a unique adhesive silicone rubber composition which is fully adherent to organic resins, especially thermoplastic resins, but not to metals, typically metal molds.

EP-A-1 555 297 relates to injection molding fluoropolyether rubber compositions, while EP-A-1 422 260 and EP-A1-1 389 632 relate to curable fluoropolyether rubber compositions and rubber articles.

For the purpose of rationalizing the manufacture process, there is an increasing demand for integral molding of an organic resin and a fluoroelastomer under short-term curing conditions. It is thus desired to have a fluoropolyether rubber composition which is effectively adherent to organic resins and which is releasable from rubber-shaping metal members, typically metal molds in a practically acceptable manner.

### DISCLOSURE OF THE INVENTION

An object of the present invention is to provide a curable fluoropolyether rubber composition which tightly bond to organic resins, especially thermoplastic resins under short-term curing conditions and which itself is releasable from rubber-shaping metal members, typically metal molds in a practically acceptable manner. Another object of the present invention is to provide an integral molded resin/rubber article obtained by using such a composition.

The inventors have found that when a specific tackifier is compounded in a curable fluoropolyether composition comprising (a) a polyfluorodialkenyl compound, (b) a fluorinated organohydrogenpolysiloxane, (c) a platinum group compound, and (d) hydrophobic silica powder, as defined in claim 1, respectively, the composition becomes fully adherent to organic resins, especially thermoplastic resins, but least to metals.

In one aspect, the invention provides a curable fluoropolyether composition according to claim 1.

Moreover, the tackifier (e) preferably exhibits a contact angle of up to 70° on an organic resin as an adherend.

In another aspect, the invention provides a molded rubber article obtained by integral molding of an organic resin and a cured rubber product of the curable fluoropolyether composition.

Further, the following integral molded resin/rubber articles are provided:

An integral molded resin/rubber article comprising the molded rubber article which is for use in automobiles as diaphragms such as fuel regulator diaphragms, pulsation damper diaphragms, oil pressure switch diaphragms, and EGR diaphragms, valves such as canister valves and power control valves, O-rings such as quick connector O-rings and injector O-rings, or seals such as oil seals and cylinder head gaskets;

An integral molded resin/rubber article comprising the molded rubber article which is for use in chemical plants as pump diaphragms, valves, O-rings, packings, oil seals, gaskets;

An integral molded resin/rubber article comprising the molded rubber article which is for use in ink jet printers and semiconductor manufacturing lines as diaphragms, valves, O-rings, packings, or gaskets;

An integral molded resin/rubber article comprising the molded rubber article which is for use in analytical and scientific instruments and medical equipment as pump diaphragms, O-rings, packings, valves, or joints;

An integral molded resin/rubber article comprising the molded rubber article which is for use as tent coating materials, molded parts, extruded parts, coats, copier roll materials, electrical moisture-proof coatings, laminate rubber fabrics, fuel cell gaskets, or seals; and

An integral molded resin/rubber article comprising the molded rubber article which is for use in aircraft as O-rings, face seals, packings, gaskets, diaphragms, valves or the like in fluid piping for engine oil, jet fuel, hydraulic oil, or Skydrol^{®}.

### BENEFITS OF THE INVENTION

The curable fluoropolyether composition of the invention cures into a cured product having satisfactory properties including solvent resistance, chemical resistance, heat resistance, low-temperature properties, and low-moisture-permeability. It is fully adherent to organic resins by heating at a relatively low temperature for a relatively short time, but little adherent to metals, so that it is useful in integral molding of fluoropolyether rubber and organic resin in a metal mold to form an integral composite part. It is useful as bonding and sealing members for electric and electronic parts in magnetic hard disk drives, optical disk drives, microwave ovens and other electric appliances, building sealing materials, and automobile rubber materials. In particular, it forms a fluoroelastomer having excellent adhesion to polycarbonate (PC), polyethylene terephthalate (PET), polyethylene naphthalate (PEN) and similar plastics, so that it is useful in a bonding application to articles (e.g., housings) based on such plastics.

### DESCRIPTION OF THE PREFERRED EMBODIMENTS

One embodiment of the invention is a fluoropolyether composition of addition reaction cure type comprising components (a) to (e) as defined in claim 1.

### (a) Polyfluorodialkenyl compound

A main component in the fluoropolyether rubber composition of addition reaction cure type according to the invention is a polyfluorodialkenyl compound having alkenyl groups at both ends of its molecular chain and is of the following general formula (14).

CH₂=CH-(Z)ₐ-Rf-(Z')ₐ-CH=CH₂ (14)

Herein Z is a divalent group of the formula: -CH₂- , -CH₂O-, -CH₂OCH₂- or -Y-NR-CO- wherein Y is a divalent group of the formula: -CH₂- or the following formula: 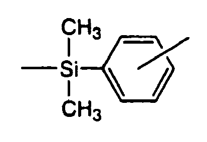 and R is hydrogen or a substituted or unsubstituted monovalent hydrocarbon group. Z' is a divalent group of the formula: -CH₂-, -OCH₂-, -CH₂OCH₂- or -CO-NR-Y'- wherein Y' is a divalent group of the formula: -CH₂- or the following formula: 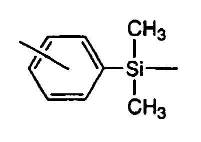 and R is as defined above. The subscript "a" is each independently 0 or 1.
R associated with Z or Z' stands for hydrogen atoms or substituted or unsubstituted monovalent hydrocarbon groups, preferably of 1 to 12 carbon atoms, more preferably of 1 to 10 carbon atoms, for example, alkyl groups such as methyl, ethyl, propyl, butyl, hexyl, cyclohexyl and octyl, aryl groups such as phenyl and tolyl, aralkyl groups such as benzyl and phenylethyl, and substituted forms of the foregoing groups in which some or all of the hydrogen atoms are replaced by halogen atoms.
Rf is a divalent group of the general formula (i) or (ii).

   -CₜF₂ₜ[OCF₂CF(CF₃)]ₚOCF₂(CF₂)ᵣCF₂O[CF(CF₃)CF₂O]_{q}CₜF₂ₜ- (i)

   Herein p and q each are an integer of 1 to 150, the sum of p+q is on the average 2 to 200, r is an integer of 0 to 6, and t is 2 or 3.

   -CₜF₂ₜ(OCF₂CF(CF₃)]ᵤ(OCF₂)ᵥOCₜF₂ₜ- (ii)

   Herein u is an integer of 1 to 200, v is an integer of 1 to 50, and t is as defined above.

Included in the groups of formula (i) are groups of the formula (i'):

-CF₂CF₂[OCF₂CF(CF₃)]_{w}OCF₂(CF₂)_{z}CF₂O[CF(CF₃)CF₂O]_{y}CF₂CF₂- (i')

wherein w and y each are an integer of at least 1, the sum of w+y is on the average 2 to 200, and z is an integer of 0 to 6.

Specific examples of Rf include groups of the following three formulae, of which divalent groups of the first formula are preferred. 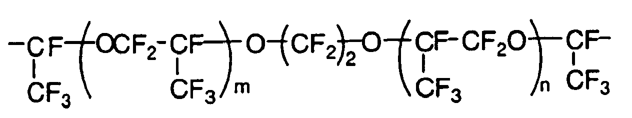 Herein, m and n each are an integer of at least 1, and an average of m+n is from 2 to 200. 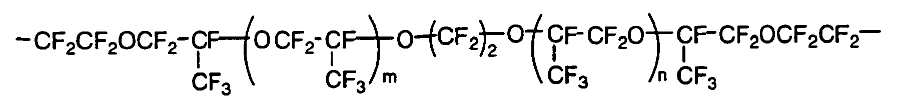 Herein, m and n each are an integer of at least 1, and an average of m+n is from 2 to 200. 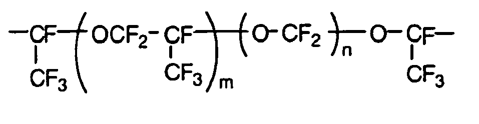 Herein, m is an integer of 1 to 200, and n is an integer of 1 to 50.

Illustrative examples of the polyfluorodialkenyl compound having formula (14) are given below. 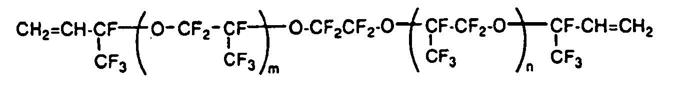 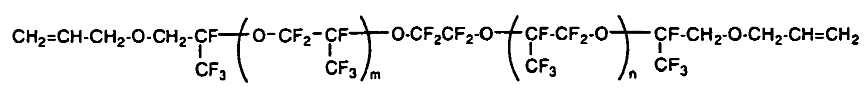 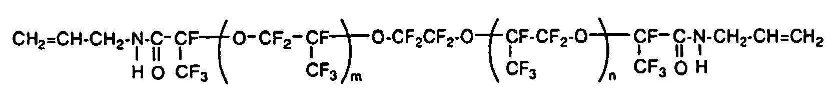 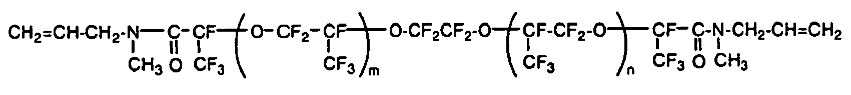 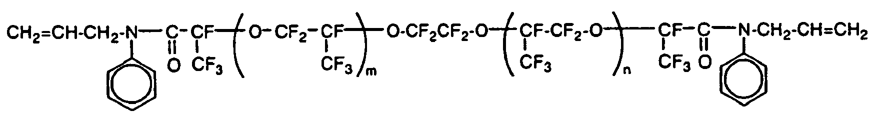 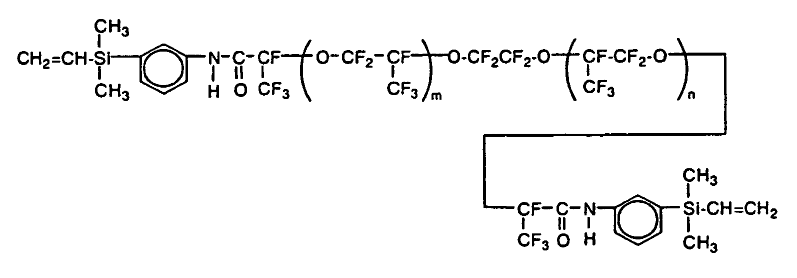 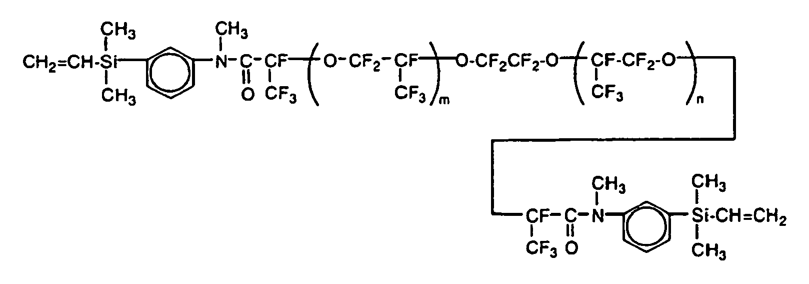 Herein, m and n each are an integer of at least 1, and an average of m+n is from 2 to 200.

### (b) Fluorinated organohydrogenpolysiloxane

To component (a), a fluorinated organohydrogenpolysiloxane (b) is added as a crosslinker or chain extender. It is a fluorine-modified organosilicon compound having at least two silicon-bonded hydrogen atoms (i.e., SiH groups) per molecule. From the standpoints of compatibility with or dispersibility in component (a) and uniformity after curing, the fluorinated organohydrogenpolysiloxane contain at least one perfluorooxyalkyl, perfluoroalkyl, perfluorooxyalkylene or perfluoroalkylene group per molecule as well as preferably at least two, more preferably at least three hydrosilyl groups.

The perfluorooxyalkyl, perfluoroalkyl, perfluorooxyalkylene, and perfluoroalkylene groups include those of the following general formulae.

Perfluoroalkyl groups:

C_{g}F_{2g+1}-

Herein g is an integer of 1 to 20, preferably 2 to 10. Perfluoroalkylene groups:

-C_{g}F_{2g}-

Herein g is an integer of 1 to 20, preferably 2 to 10. Perfluorooxyalkyl groups:

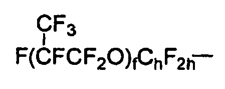

Herein f is an integer of 2 to 200, preferably 2 to 100, and h is an integer of 1 to 3.

Perfluorooxyalkylene groups:

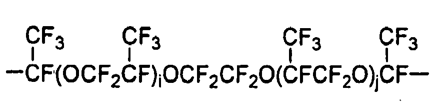

Herein i and j each are an integer of at least 1, and an average of i+j is 2 to 200, and preferably 2 to 100.

- (CF₂CF₂O)ₖ(CF₂O)ₗCF₂-

Herein k and 1 each are an integer of at least 1, and an average of k+l is 2 to 200, and preferably 2 to 100.

Divalent linkages for connecting the above perfluoroalkyl, perfluorooxyalkyl, perfluoroalkylene or perfluorooxyalkylene groups with silicon atoms include alkylene and arylene groups and combinations thereof, which may be separated by an ether bond, amide bond, carbonyl bond or the like. Specific examples include linkages having 2 to 12 carbon atoms, such as -CH₂CH₂-, -CH₂CH₂CH₂-, -CH₂CH₂CH₂OCH₂-, -CH₂CH₂CH₂-NH-CO-, -CH₂CH₂CH₂-N(Ph)-CO-, -CH₂CH₂CH₂-N(CH₃)-CO-, and -CH₂CH₂CH₂-O-CO-, and -Ph'-N(CH₃)-CO- wherein Ph is phenyl and Ph' is phenylene.

In addition to the monovalent or divalent fluorinated substituent group, i.e., organic group having a perfluorooxyalkyl, perfluoroalkyl, perfluorooxyalkylene or perfluoroalkylene group, the fluorinated organohydrogenpolysiloxane (b) may contain a monovalent substituent group bonded to a silicon atom. Suitable substituent groups are substituted or unsubstituted hydrocarbon groups of 1 to 20 carbon atoms including alkyl groups such as methyl, ethyl, propyl, butyl, hexyl, cyclohexyl, octyl, and decyl, alkenyl groups such as vinyl and allyl, aryl groups such as phenyl, tolyl and naphthyl, aralkyl groups such as benzyl and phenylethyl, and substituted forms of the foregoing in which at least some hydrogen atoms are substituted by chlorine atoms, cyano groups or the like, such as chloromethyl, chloropropyl, and cyanoethyl.

The fluorinated organohydrogenpolysiloxane (b) may be cyclic, chain-like, three-dimensional network or combinations thereof. Although the number of silicon atoms in the fluorinated organohydrogenpolysiloxane is not particularly limited, it is generally from 2 to about 60, preferably from 3 to about 30.

Suitable organohydrogenpolysiloxanes (b) having a fluorinated group include the compounds shown below. These compounds may be used alone or in admixture of two or more. In the formulae, Ph is phenyl.

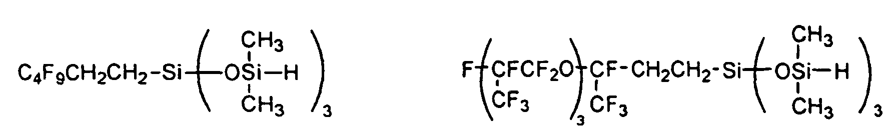

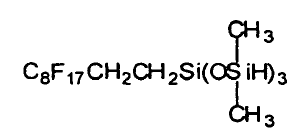

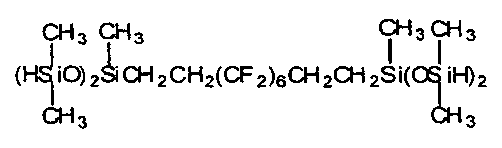

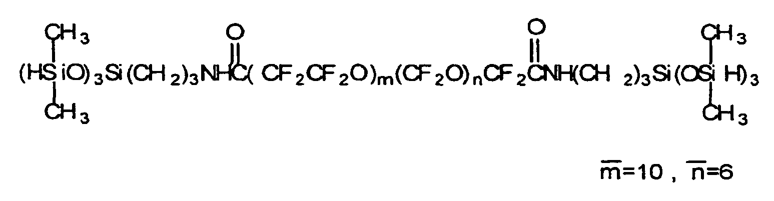

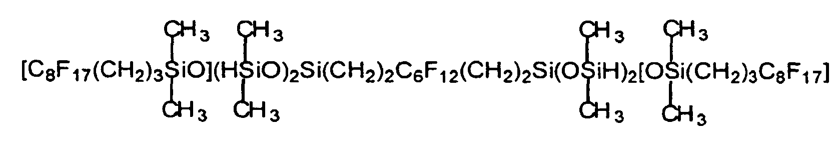

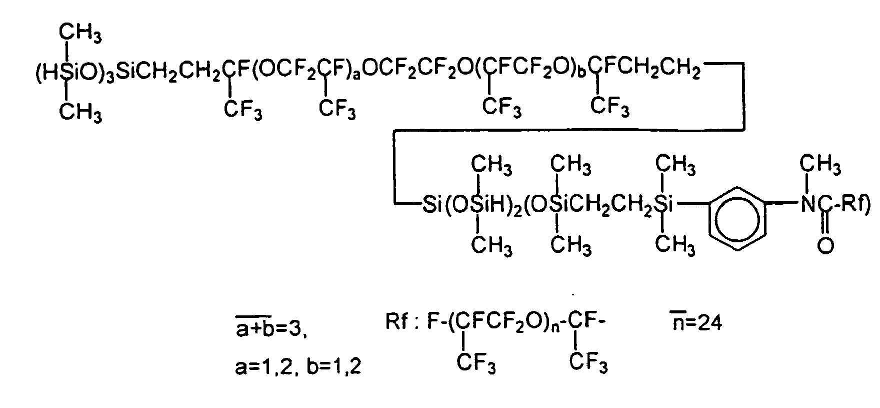

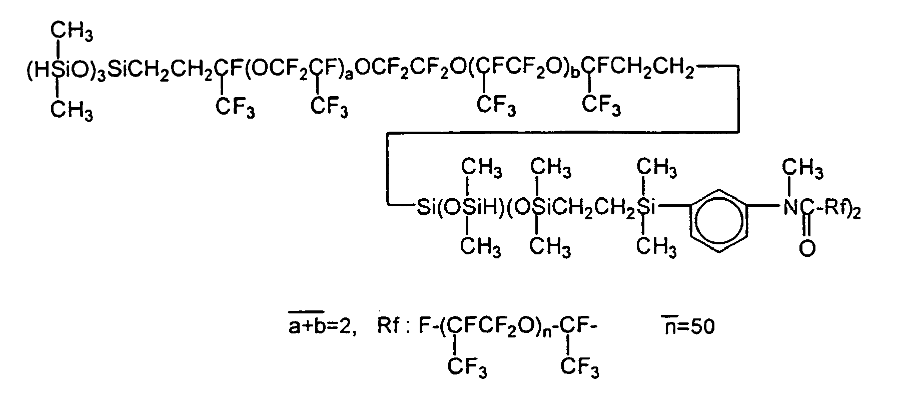

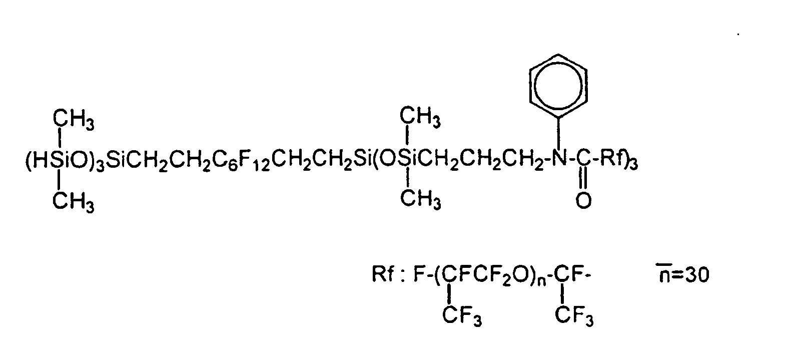

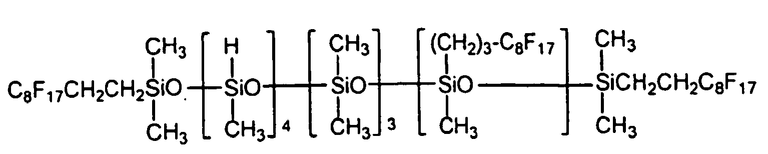

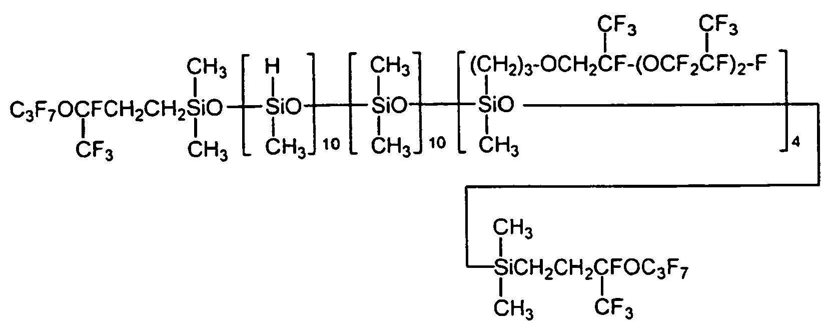

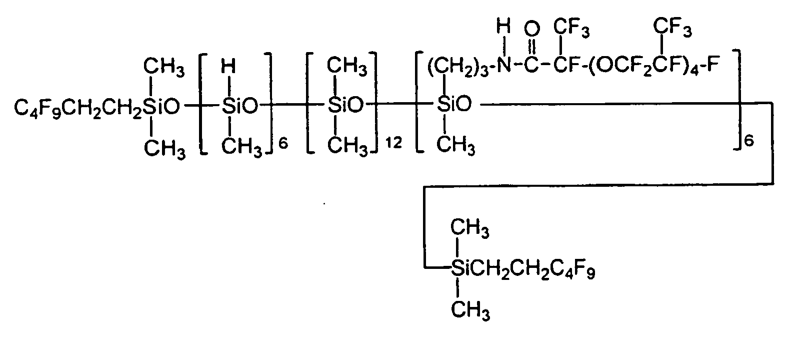

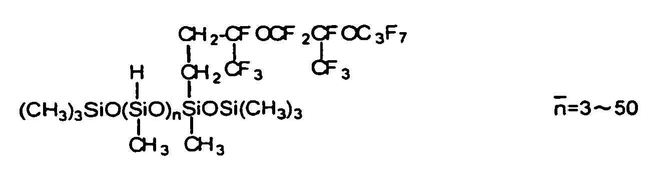

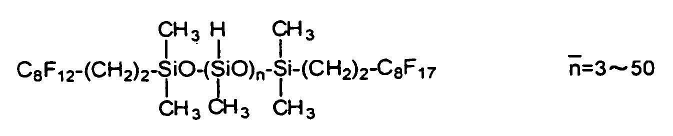

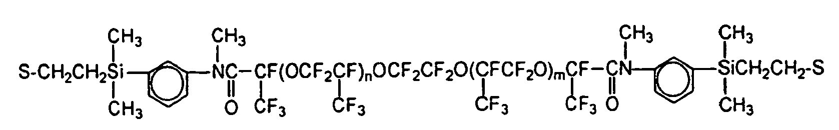

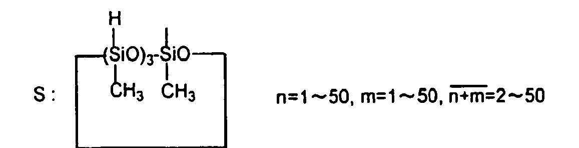

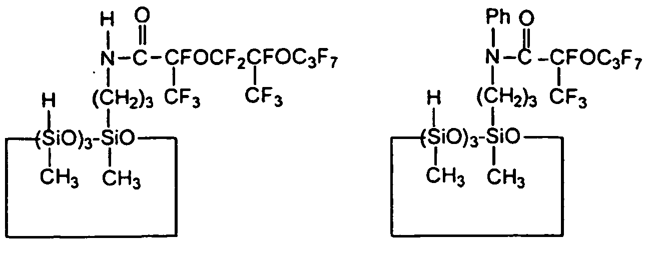

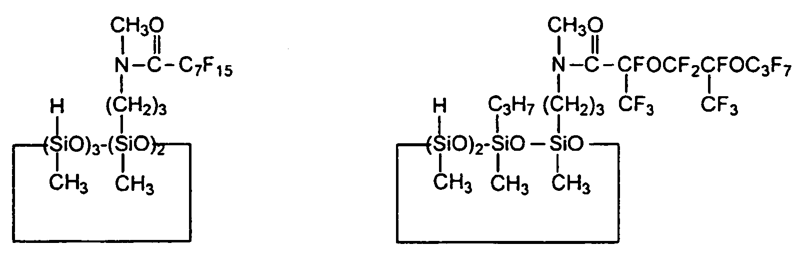

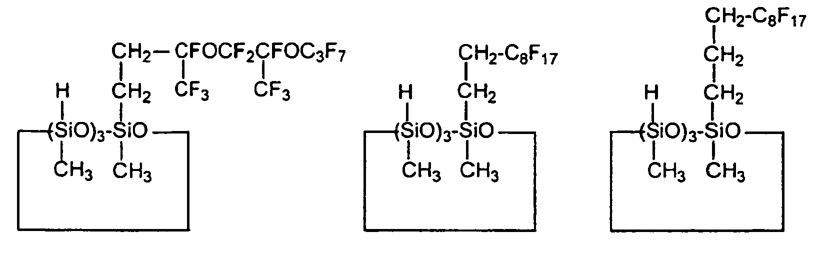

Component (b) is compounded in an effective amount to cure component (a). Specifically, component (b) is used in a sufficient amount to provide 0.5 to 5.0 moles, and preferably 1.0 to 2.0 moles of SiH groups (available from component (b)) per mole of the entire alkenyl groups available from component (a). Outside the range, too less amounts may lead to an insufficient degree of crosslinking. With excessive amounts, chain extension may become predominant, resulting in such disadvantages as undercure, foaming or degraded properties of heat resistance and compression set.

For producing a uniform cured product, it is desired to use the crosslinker (b) which is compatible with component (a).

### (c) Platinum group compound

Component (c) is a platinum group compound which is a catalyst for promoting the addition reaction between unsaturated hydrocarbon groups in component (a) and hydrosilyl groups in component (b). Of the platinum group metal catalysts, platinum compounds are often used because they are readily available. Exemplary platinum compounds include chloroplatinic acid; complexes of chloroplatinic acid with olefins (e.g., ethylene), alcohols and vinylsiloxanes; and metallic platinum supported on silica, alumina or carbon. Known platinum group metal catalysts other than the platinum compounds include rhodium, ruthenium, iridium, and palladium compounds, for example, RhCl(PPh₃)₃, RhCl(CO)(PPh₃)₂, Ru₃(CO)₁₂, IrCl(CO)(PPh₃)₂, and Pd(PPh₃)₄ wherein Ph denotes phenyl.

The platinum group compound may be used in a catalytic amount. It is preferably added in an amount to give 0.1 to 500 parts by weight of platinum group metal per million parts by weight of components (a) and (b) combined.

### (d) Silica powder

Component (d) is hydrophobic silica powder which functions to impart appropriate physical strength to the cured product of the composition. The silica powder should preferably have a specific surface area of at least 50 m²/g, and more preferably 50 to 400 m²/g, as measured by the standard BET method, as is often required as a filler for silicone rubber.

The hydrophobic silica powder is obtained through hydrophobic treatment of fumed silica or colloidal silica with silicon compounds or the like. The treatment of silica with silicon compounds for hydrophobizing may be performed by well-known methods, and an optimum method may be selected for a particular type of silicon compound used.

Suitable silicon compounds include organochlorosilanes such as trimethylchlorosilane, dimethylvinylchlorosilane, and dimethyldichlorosilane; organosilazanes such as hexamethyldisilazane, 1,3-divinyl-1,1,3,3-tetramethyldisilazane, and hexamethylcyclotrisilazane; and organohydroxysilanes such as trimethylhydroxysilane and dimethylhydroxysilane, which may be used alone or in admixture.

As to component (d), it is also possible to add a fluorinated organosilane or fluorinated organosiloxane as a surface treating agent to silica powder. The surface treating agent may be added when a mixture of polyfluorodialkenyl compound (a) and silica powder (d) is heat kneaded in a milling means such as a kneader. Heat treatment is performed while a small amount of water is added if necessary, whereby surface silanol on silica particles is treated. The heat treatment is performed at a temperature in the range of 100 to 200°C. This improves the miscibility of silica powder with other components for thereby restraining the composition from the "crepe hardening" phenomenon during shelf storage and ameliorating the flow of the composition.

Suitable fluorinated organosilanes and organosiloxanes may be organosilanes and organosiloxanes having at least one monovalent perfluorooxyalkyl group, monovalent perfluoroalkyl group, divalent perfluorooxyalkylene group or divalent perfluoroalkylene group, and at least one silicon-bonded hydroxy and/or alkoxy group, and preferably alkoxy group of 1 to 6 carbon atoms, more preferably 1 to 4 carbon atoms, in the molecule. Their molecular structure is not particularly limited.

Component (d) is compounded in an amount of 5 to 50 parts by weight, preferably 10 to 30 parts by weight per 100 parts by weight of component (a). If the amount of component (d) is less than 5 pbw, cured physical properties may be poor and adhesion be inconsistent. If the amount of component (d) exceeds 50 pbw, the resulting composition may become less flowing and inefficient to work and mold, and cured physical properties may be poor.

### (e) Tackifier

Component (e) is a tackifier which is at least one silicon compound selected from the general formulae (I), (II), and (III):

A-(D-B)ₓ-D-A (I)

C-(B-D)ₓ-B-C (II)

A-E (III)

wherein A and B each are a silane or siloxane linkage having at least one silicon-bonded hydrogen atom and optionally a silicon-bonded substituent group, said substituent group, if present, is an unsubstituted hydrocarbon group of 1 to 20 carbon atoms, A is a monovalent linkage, B is a divalent linkage; C, D and E each are a linkage containing at least one group selected from the formulae (1) to (13) and optionally another group, said other group, if present, is an alkyl and/or alkylene group, C and E are monovalent linkages and D is a divalent linkage, with the proviso that E is a monovalent linkage in which the total number of atoms other than hydrogen and halogen atoms is at least 8; and x is 0 or a positive number.

Component (e) is an essential component characterizing the invention. The minimum requirement of this compound (e) is that it have at least one hydrogen atom directly bonded to a silicon atom (i.e., SiH group) in the molecule and it improve the affinity of the composition to an organic resin as adherend. As used herein, the term "adherend" refers to a body to which the fluoropolyether composition is to be bonded, specifically of organic resin, more specifically thermoplastic resin. From the standpoint of bonding fluoropolyether rubber to an organic resin adherend, it is preferred that the compound (e) have at least two silicon-bonded hydrogen atoms. However, adhesion to organic resin is not achievable only with this feature because there exists a so-called compatibility between the organic resin adherend and component (e). That is, from the standpoint of reactivity with organic resin, the contact angle becomes a significant factor. Then component (e) varies in accordance with the type of organic resin as the adherend. While most organic resins as the adherend are generally composed of carbon, oxygen, nitrogen and sulfur atoms, component (e) should have a linkage C, D or E in addition to the silane or siloxane linkage A or B in order to enhance the affinity to organic resins.

Moreover, component (e) should preferably be molten under actual bonding conditions. A compound in a molten state having a contact angle equal to or less than 70° on a resin adherend is preferred for achieving the objects of the invention. Measurement of contact angle may generally be carried out at normal temperature (25°C) although the temperature at which fluoropolyether rubber is cured is regarded optimum for measurement. However, if component (e) is solid or wax at normal temperature, the contact angle in the molten state must be measured.

For making more definite the concept of component (e) in the invention, the concept contemplated by the inventor is described below although the invention is not limited thereby. Specifically, the inventor has found that a hydrosilyl group (≡SiH) is effective as a factor capable of forming a bond to thermoplastic resins, that is, a factor capable of generating a great cohesive force between cured fluoropolyether rubber and thermoplastic resin. Although it is not sure whether hydrosilylation reaction with the resin occurs or silanol (≡SiOH) forms as a result of hydrolysis and acts as a secondary cohesive force for adhesion, it is sure that in fact, the ≡SiH group greatly contributes to adhesion. Another significant factor accounting for adhesion is interaction with thermoplastic resin. It is contemplated that a certain portion (specifically linkage C, D or E) of component (e) contains a molecular moiety having a high affinity to the resin adherend, which brings the overall component (e) closer to a distance at which cohesive force with the thermoplastic resin adherend is generated.

For this reason, component (e) as used herein is not generally encompassed within fluorinated organohydrogenpolysiloxanes which are generally used as a curing agent in addition reaction curing fluoropolyether rubber compositions. Specifically, fluorinated organohydrogenpolysiloxanes used as the curing agent are compounds having a very low surface tension as is well known in the art. They thus have a contact angle of less than 70° with the resin surface, but fail to develop adhesion to organic resins as intended herein. This suggests a need for a group capable of imparting affinity to organic resins, in addition to the siloxane bond. That is, it is believed that in the structure of component (e), the hydrosilyl group serves as a cohesive force-generating functional group and the linkage C, D or E other than the siloxane bond plays the role of bringing component (e) closer to the cohesive force-generating region relative to the resin adherend. To this end, the relevant moiety should preferably have a structure similar to that of the adherend resin. The contact angle is one index representative of similarity.

For the mere purpose of bonding to resins, a number of tackifiers which have been proposed thus far are applicable. Most of such compounds are compounds having both a silicon-bonded hydrogen atom and a group of at least one type selected from alkoxysilyl, glycidyl and acid anhydride groups. These compounds are effective in adhesion to certain thermoplastic resins. It was found that the reliability of adhesion is improved by further introducing unsaturated groups into the adherend resin through modification or addition and mixing. However, these tackifiers have the drawback that they also develop sufficient adhesion to metals, as opposed to the objects of the invention.

For this reason, the compound suited as component (e) should be free of an adhesive functional group as exemplified above, typically trialkoxysilyl, glycidyl or acid anhydride in order to prevent adhesion to metal molds. Therefore, component (e) should be a compound of formula (I), (II) or (III), that is, a compound containing a linkage A or B having at least one, preferably at least two, SiH group and a linkage C, D or E.

As described above, A and B each are a silane or siloxane linkage having at least one silicon-bonded hydrogen atom (i.e., SiH group) and optionally a silicon-bonded substituent group, said substituent group, if present, is an unsubstituted hydrocarbon group (such as an alkyl group) of 1 to 20 carbon atoms, A is a monovalent linkage, B is a divalent linkage.

C, D and E each are a linkage containing at least one group selected from the following formulae (1) to (13) and optionally another group, said other group, if present, is an alkyl and/or alkylene group, C and E are monovalent linkages and D is a divalent linkage, with the proviso that E is a monovalent linkage in which the total number of atoms other than hydrogen and halogen atoms is at least 8, preferably 8 to 20. Letter x is 0 or a positive number, preferably 0 or an integer of 1 to 10.

Preferably each of C, D and E is a linkage containing at least one group selected from the following formulae (1) to (13). 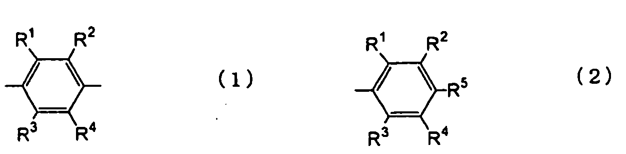 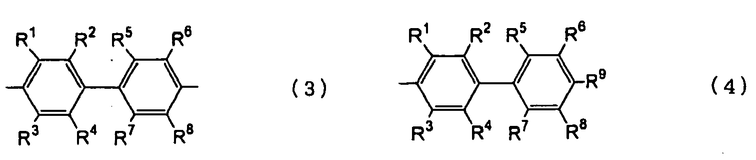 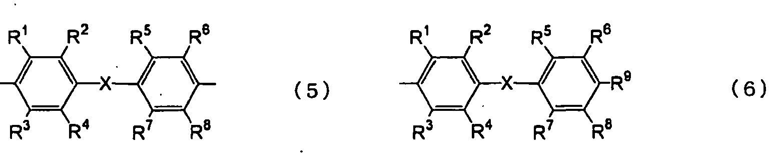 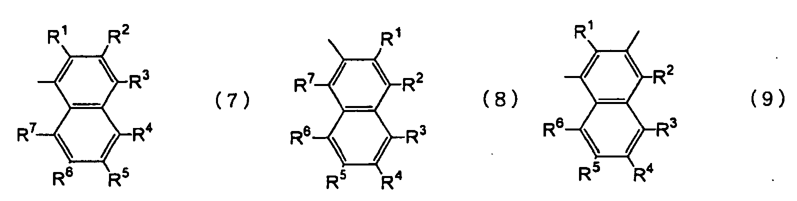 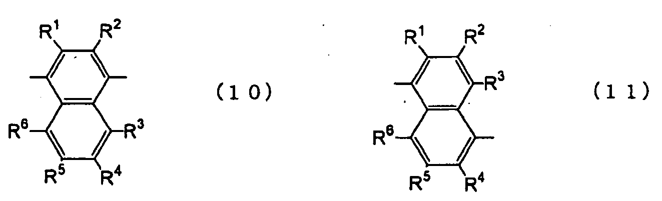 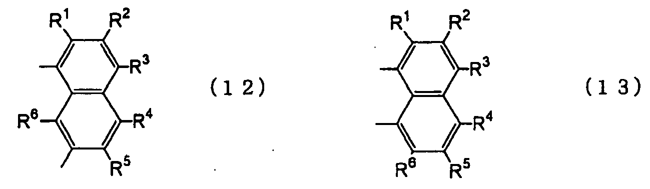 Herein R¹ to R⁹ are each independently a monovalent group selected from among hydrogen, halogen, hydroxyl, unsubstituted monovalent hydrocarbon or alkoxy groups of 1 to 20 carbon atoms,

X is a divalent group represented by the formula: 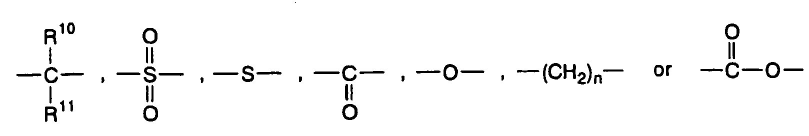 wherein R¹⁰ to R¹¹ are each independently selected from among hydrogen, halogen, unsubstituted monovalent hydrocarbon groups of 1 to 20 carbon atoms, or R¹⁰ to R¹¹, taken together, may form a carbocyclic or heterocyclic ring, and "n" is an integer of at least 2, preferably 2 to 6.

Examples of the carbocyclic and heterocyclic rings formed by R¹⁰ and R¹¹ taken together are given below.

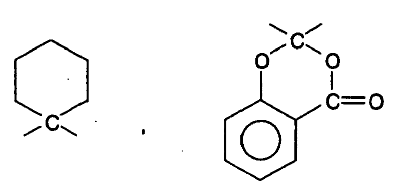

Illustrative examples of component (e) are shown below.

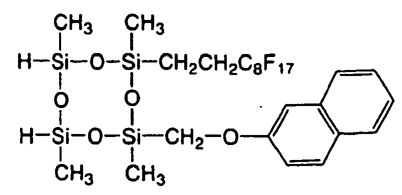

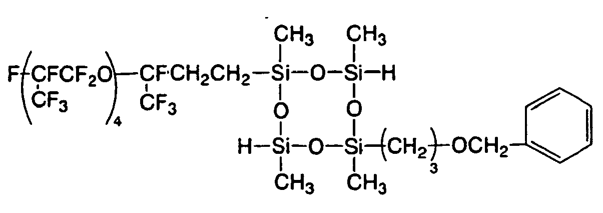

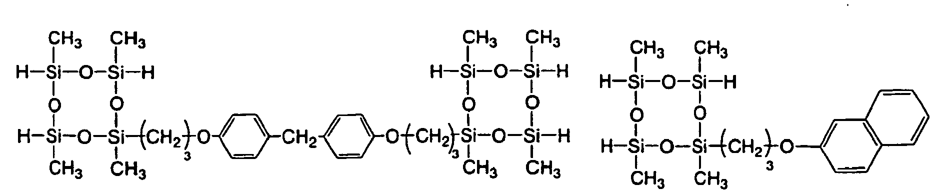

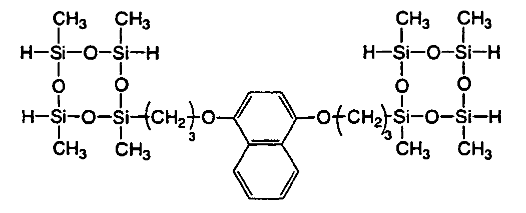

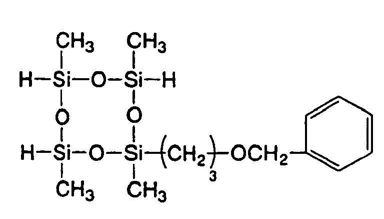

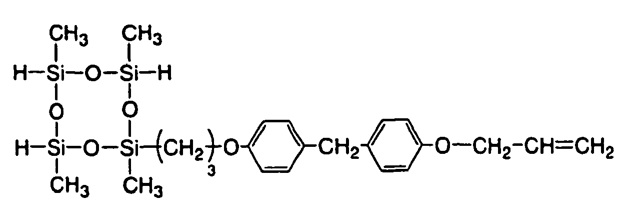

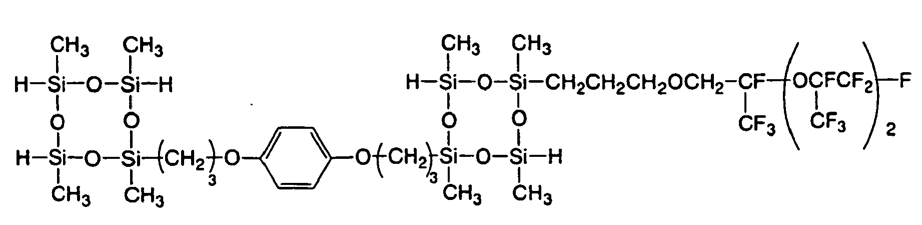

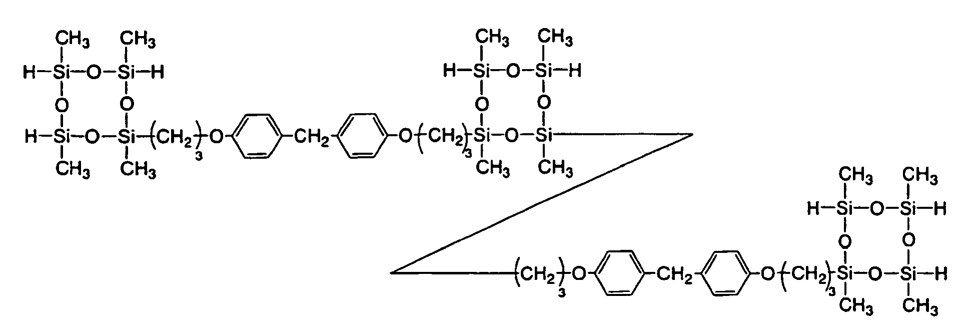

The following compounds are also exemplified.

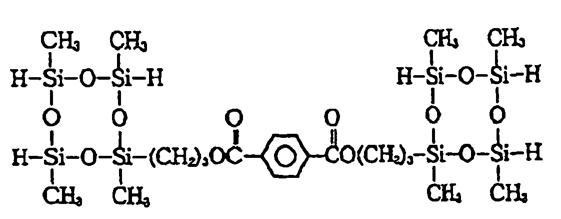

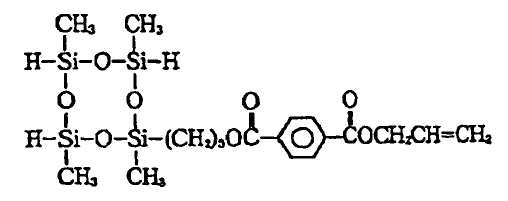

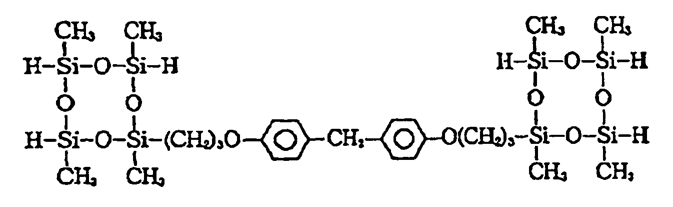

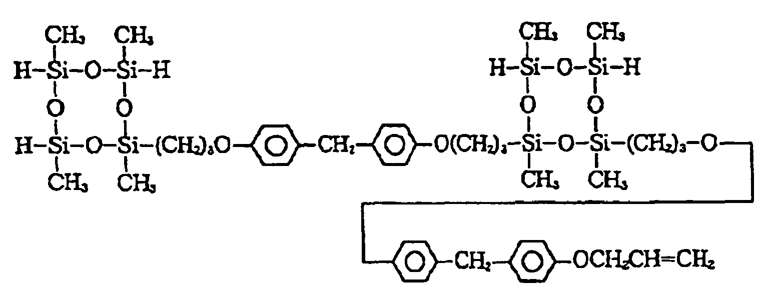

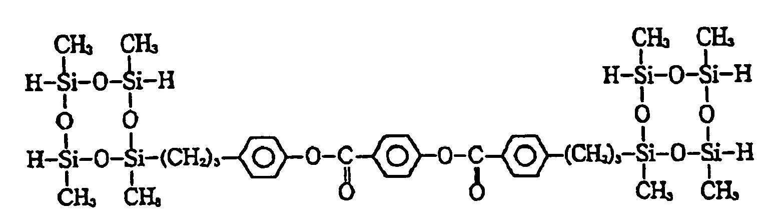

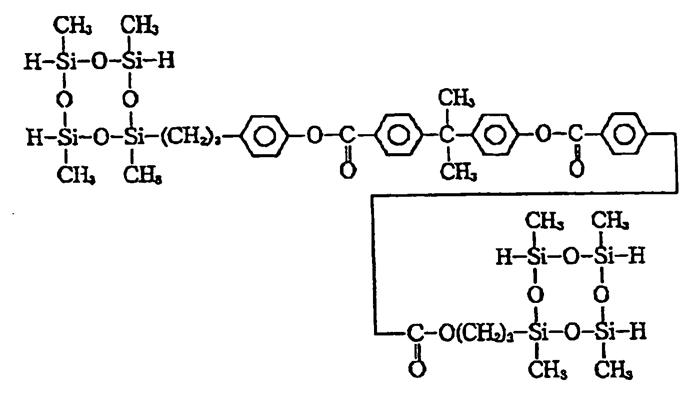

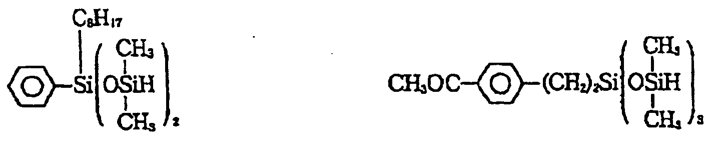

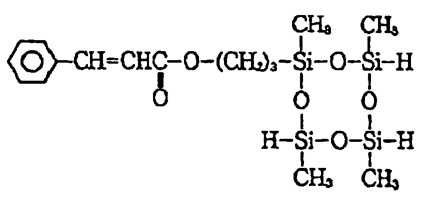

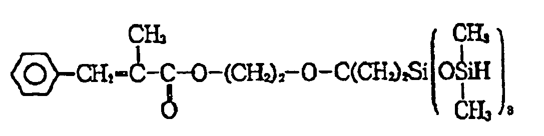

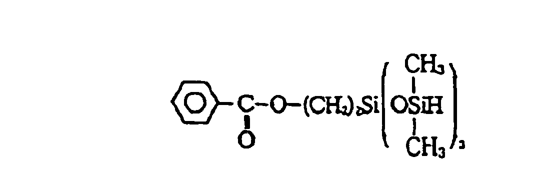

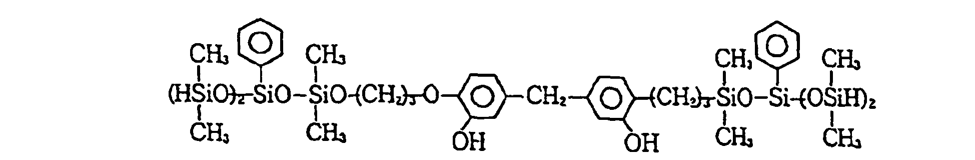

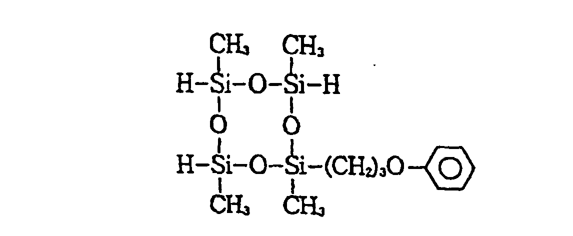

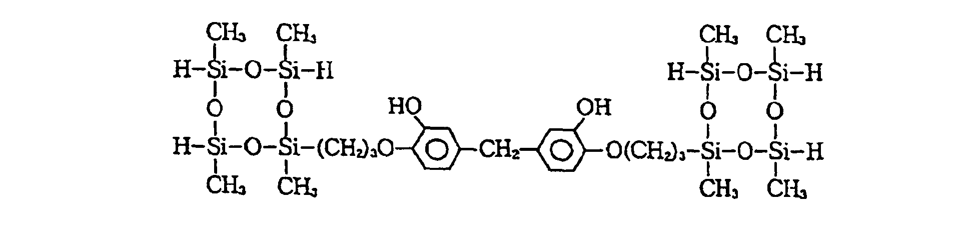

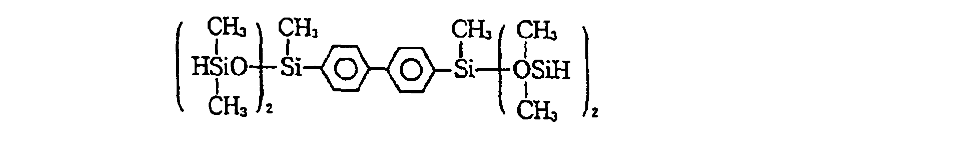

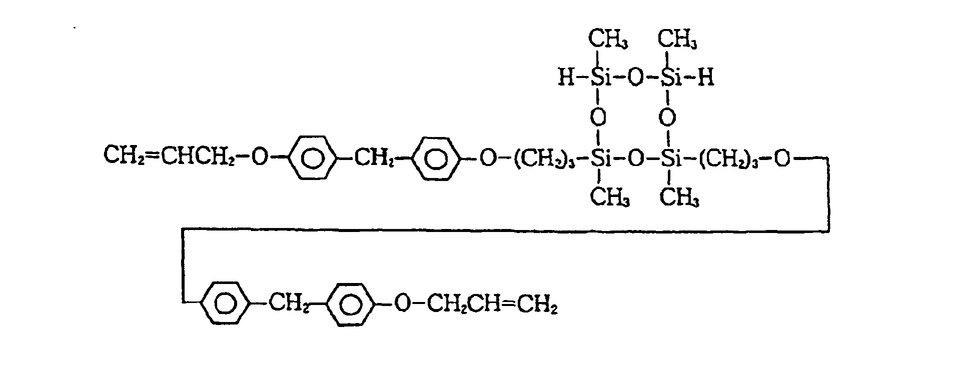

Component (e) may be compounded in any desired amount although an appropriate amount is 0.01 to 30 parts by weight, and more preferably 0.1 to 5 parts by weight per 100 parts by weight of polyfluorodialkenyl compound (a). Less than 0.01 pbw of component (e) may be insufficient to provide adhesion to the resin adherend. More than 30 pbw of component (e) can adversely affect the physical properties of fluoropolyether rubber and rather provide some adhesion to metals.

### Other components

In the curable fluoropolyether composition of the invention, various other additives may be added for enhancing its utility.

Suitable additives include polysiloxanes containing CH₂=CH(R)SiO units wherein R is hydrogen or a substituted or unsubstituted monovalent hydrocarbon group (see JP-B 48-10947) and acetylene compounds (see USP 3,445,420 and JP-B 4-3774) which are added for controlling the cure rate of curable compositions, and ionic compounds of heavy metals (see USP 3,532,649).

Regulators for controlling the hydrosilylating reaction catalyst include acetylene alcohols such as 1-ethynyl-1-hydroxycyclohexane, 3-methyl-1-butyn-3-ol, 3,5-dimethyl-1-hexyn-3-ol, 3-methyl-1-penten-3-ol, and phenyl butynol, and 3-methyl-3-penten-1-yne, 3,5-dimethyl-3-hexen-1-yne, polymethylvinylsiloxane cyclic compounds, organophosphorus compounds, and the like. The addition of the regulator keeps appropriate curing reactivity and shelf stability.

In the curable fluoropolyether composition of the invention, fillers may be added for the purposes of reducing thermal shrinkage during curing, reducing the coefficient of thermal expansion of the cured elastomer, improving thermal stability, weatherability, chemical resistance, flame retardance or mechanical strength, or reducing gas permeability.

In this case, the fillers include inorganic fillers, typically reinforcing or semi-reinforcing fillers such as quartz flour, fused quartz flour, diatomaceous earth, and calcium carbonate; inorganic pigments such as cobalt aluminate; heat resistance improvers such as titanium oxide, iron oxide, cerium oxide, cerium hydroxide, zinc carbonate, magnesium carbonate, and manganese carbonate; heat conductive agents such as alumina, boron nitride, silicon carbide, and metal powder; electroconductive agents such as carbon black, silver powder, and electroconductive zinc white; and organic compounds as organic pigments, antioxidants or the like. Further, non-functional perfluoropolyethers may also be added as a plasticizer, viscosity regulator, flexibilizer or the like. These additives may be used in any desired amounts as long as they do not compromise the objects of the invention.

As a tackifying component other than component (e), any of known tackifiers containing epoxy, alkoxy groups or the like may also be added. The foregoing additives may be used in any desired amounts as long as they do not compromise the properties of the composition and the physical properties of the cured product.

### Preparation method

The composition of the invention may be prepared by any desired method, for example, by intimately mixing components (a) to (e) and optional components on a mixing device such as a Ross mixer, planetary mixer, Hobart mixer or two-roll mill.

The composition may also be prepared as a two-part composition with one part containing component (a) and the other part containing component (b), which are mixed together on use.

With respect to curing of the resulting composition, room temperature curing is possible depending on the type of functional group in component (a) and the type of catalyst, although the composition is generally cured by heating at a temperature of preferably at least 60°C, more preferably 100 to 200°C for a time of several minutes to several hours.

The composition of the invention is effectively used in bonding to an organic resin, typically thermoplastic resin to form an integral molded article. The thermoplastic resins as the adherend include commonly used engineering plastics such as ABS resins, nylon, polycarbonate (PC), polyphenylene oxide, polybutylene terephthalate (PBT), polyphenylene sulfide, polyethylene terephthalate (PET), and polyethylene naphthalate (PEN), and other engineering plastics such as polyarylate, polysulfone, polyether sulfone, polyether imide, polyether ether ketone, polyimide, and liquid crystal polymers.

On use, the curable composition of the invention may be dissolved in suitable fluorinated solvents (solvents containing fluorine in the molecule), such as m-xylene hexafluoride and alkyl perfluoroalkyl ethers to a desired concentration depending on the application or purpose intended.

### Molded article

The other aspect of the invention relates to a molded rubber article comprising an organic resin and a cured rubber product of the curable fluoropolyether composition, which article is prepared by integral molding of the organic resin and the fluoropolyether composition. An appropriate molding method may be selected in accordance with the shape of the desired molded article. Prior art known methods may be employed, for example, casting of the composition into a suitable mold followed by curing, coating of the composition on a suitable substrate followed by curing, and lamination. Among others, integral molding by injection molding is preferred for productivity or the like. In this case, a thermoplastic resin composition is primarily injected into the cavity of an injection mold, the curable fluoropolyether composition is secondarily injected over the pre-molded resin composition, and the fluoropolyether composition is cured at a temperature which is equal to or higher than the softening point and less than the melting point of the thermoplastic resin, whereby the fluoropolyether composition is bonded and integrated to the pre-molded thermoplastic resin. The mold temperature is not particularly limited as long as it is equal to or higher than the softening point of the thermoplastic resin composition. The mold temperature is usually below the melting point of the thermoplastic resin composition and preferably from 100°C to 200°C, and more preferably from 100°C to 150°C. If the temperature of the mold cavity is below the softening point of the thermoplastic resin composition, instant adhesion becomes insufficient to provide an integrally molded article. At temperatures below 100°C, curing of a composite molded part takes a longer time, resulting in a prolonged injection molding cycle. Temperatures above 200°C can cause heat deflection to the thermoplastic resin, resulting in a molded part with a degraded dimensional accuracy.

The cured rubber product thus obtained is a rubber material having a JIS A hardness of 10 to 80 according to JIS K 6253 and a glass transition temperature equal to or lower than -40°C.

The cured rubber product obtained by curing the curable fluoropolyether composition has excellent properties including heat resistance, chemical resistance, solvent resistance, water repellency, oil repellency, and weatherability, and especially low permeability to acidic gas so that it will find a variety of applications.

The molded rubber article, which is obtained by integral molding of an organic resin and the curable fluoropolyether composition or a cured rubber product thereof, can be used as members in automobiles, chemical plants, ink jet printers, semiconductor manufacturing lines, analytical and scientific instruments, medical equipment, aircraft, and fuel cells.

Specifically, the molded resin/rubber articles may be used in automobiles as diaphragms such as fuel regulator diaphragms, pulsation damper diaphragms, oil pressure switch diaphragms, and EGR diaphragms, valves such as canister valves and power control valves, O-rings such as quick connector O-rings and injector O-rings, seals such as oil seals and cylinder head gaskets; in chemical plants as pump diaphragms, valves, O-rings, packings, oil seals, gaskets; in power plants as pump diaphragms, O-rings, packings, valves, gaskets; in ink jet printers and semiconductor manufacturing lines as diaphragms, valves, O-rings, packings, gaskets; in analytical and scientific instruments and medical equipment as pump diaphragms, O-rings, packings, valves, joints; as fuel cell sealing materials, electrical moisture-proof coating materials, sensor potting materials, tent coating materials, molded parts, extruded parts, coats, copier roll materials, laminate rubber fabrics, seals; and in aircraft as O-rings, face seals, packings, gaskets, diaphragms, valves or the like in fluid piping for engine oil, jet fuel, hydraulic oil, Skydrol^{®}.

### EXAMPLE

Examples of the invention are given below by way of illustration and not by way of limitation. All parts are by weight. Me denotes a methyl group.

### Example 1

A polymer of formula (15) having a viscosity of 5,600 centistokes, 100 parts, was blended with 9 parts of silica Aerosil R976 (Aerosil Co., Ltd.). To the blend were added 0.2 part of a 50% toluene solution of ethynyl cyclohexanol, 0.2 part of a toluene solution of chloroplatinic acid-vinyl siloxane complex (platinum concentration 0.5 wt%), 3.4 parts of a compound of formula (16), 0.19 part of a compound of formula (17), and 0.72 part of a compound of formula (18). The ingredients were mixed to form a composition.

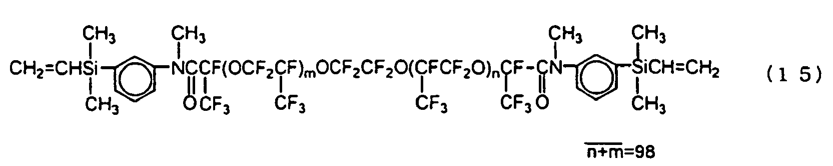

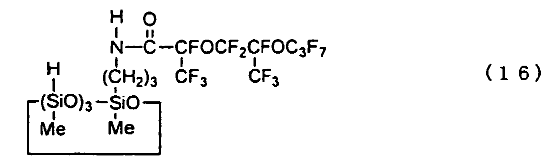

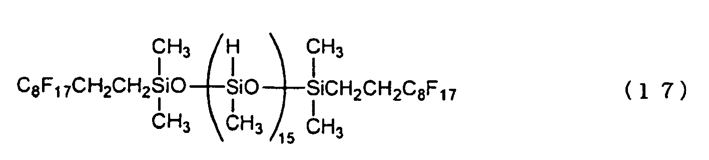

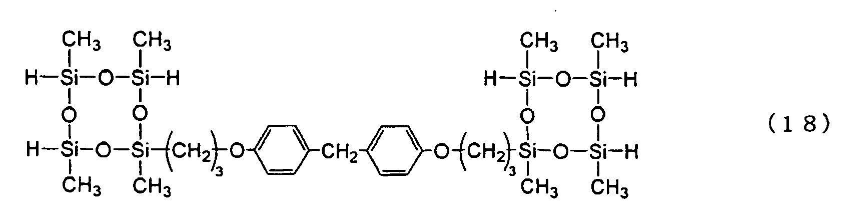

Next, an adhesion test assembly was prepared by using strips of each adherend material (100 mm x 25 mm), lap joining the strips at overlapping end portions (10 mm) with a layer of the above composition (1 mm thick) intervening therebetween, and heating at 130°C for 5 minutes for curing the composition. The assembly was subjected to a tensile shear adhesion test at a pulling rate of 50 mm/min for determining bond strength and cohesive failure. The results are shown in Table 1.

Separately, the contact angle of the tackifier (18) with the adherend resins shown in Table 2 was measured by a contact angle meter. The results are shown in Table 2.

### Example 2

A composition was prepared as in Example 1 except that 0.48 part of a compound of formula (19) was used instead of the compound of formula (18). The adhesion test was similarly carried out, with the results shown in Table 1. The contact angle of the tackifier (19) with the adherend resins was measured, with the results shown in Table 2.

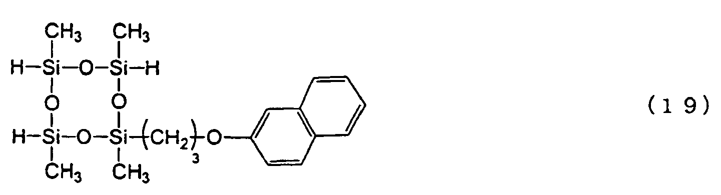

### Example 3

A composition was prepared as in Example 1 except that 0.60 part of a compound of formula (20) was used instead of the compound of formula (18). The adhesion test was similarly carried out, with the results shown in Table 1. The contact angle of the tackifier (20) with the adherend resins was measured, with the results shown in Table 2.

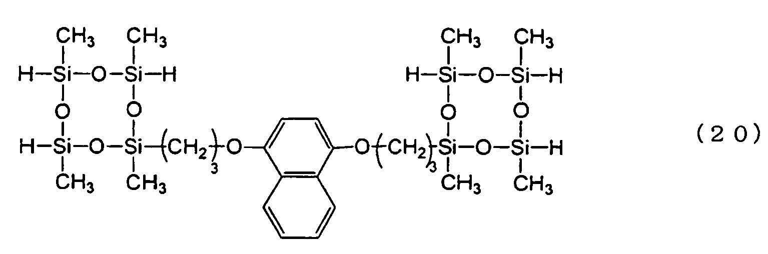

### Comparative Example 1

A composition was prepared as in Example 1 except that 1.0 part of a compound of formula (21) was used instead of the compound of formula (18). The adhesion test was similarly carried out, with the results shown in Table 1. The contact angle of the tackifier (21) with the adherend resins was measured, with the results shown in Table 2.

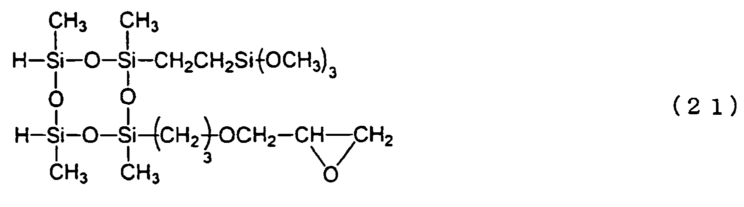

### Comparative Example 2

A composition was prepared as in Example 1 except that 0.5 part of a compound of formula (22) was used instead of the compound of formula (18). The adhesion test was similarly carried out, with the results shown in Table 1. The contact angle of the tackifier (22) with the adherend resins was measured, with the results shown in Table 2.

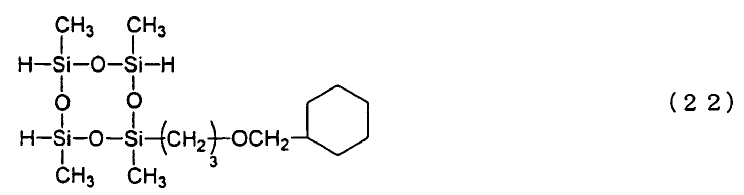

**Table 1**

| Adherend | Shear bond strength, MPa (Cohesive failure, area %) | | | | |
|---|---|---|---|---|---|
| | Example | | | Comparative Example | |
| | 1 | 2 | 3 | 1 | 2 |
| PET | 1.8(90) | 1.6(80) | 1.8(90) | 0.4(10) | 0.3(20) |
| PEN | 2.5(80) | 2.5(90) | 3.0(100) | 0.2(0) | 0.3(0) |
| PBT | 1.5(70) | 1.1(70) | 1.3(70) | 0.8(30) | 1.3(60) |
| PC | 3.0(100) | 2.6(90) | 2.8(100) | 0.4(30) | 0.5(40) |
| PI | 1.6(80) | 1.3(70) | 1.4(80) | 0.6(40) | 0.9(60) |
| Cr | 0(0) | 0.1(0) | 0(0) | 0.8(50) | 1.0(60) |
| Ni | 0(0) | 0.2(0) | 0(0) | 1.1(60) | 1.2(50) |

**Table 2**

| Adherend | Contact angle, deg | | | | |
|---|---|---|---|---|---|
| | Example | | | Comparative Example | |
| | 1 | 2 | 3 | 1 | 2 |
| PET | 38 | 16 | 34 | 24 | 20 |
| PEN | 35 | 19 | 33 | 29 | 26 |
| PBT | 40 | 18 | 38 | 27 | 23 |
| PC | 39 | 16 | 35 | 23 | 26 |
| PI | 36 | 17 | 39 | 25 | 29 |

PET: polyethylene terephthalate resin, Lumirror S10 by Toray Industries, Inc.
PEN: polyethylene naphthalate resin, Teonex Q51 by Teijin Dupont Films Japan, Ltd.
PBT: polybutylene terephthalate resin, Duranex 3300 by Polyplastics Co., Ltd.
PC: polycarbonate resin, Iupilon H-4000 by Mitsubishi Engineering Plastics Corp.
PI: polyimide resin, Aurum PL-450C by Mitsui Chemicals Co., Ltd.
Cr: chromium-plated steel strip
Ni: nickel-plated steel strip

## Claims

1. A curable fluoropolyether composition comprising
(a) 100 parts by weight of a polyfluorodialkenyl compound having alkenyl groups at both ends of the molecular chain, represented by the general formula (14):
CH₂₌CH- (Z)ₐ-Rf-(Z')ₐ-CH=CH₂ (14)
wherein Z is a divalent group of the formula: -CH₂-, -CH₂O-, -CH₂OCH₂- or -Y-NR-CO- wherein Y is a divalent group of the formula: -CH₂- or the following formula: 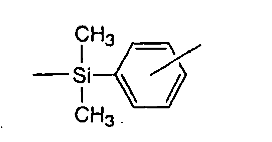 and R is hydrogen or a substituted or unsubstituted monovalent hydrocarbon group,
Z' is a divalent group of the formula: -CH₂-, -OCH₂-, -CH₂OCH₂- or -CO-NR-Y'- wherein Y' is a divalent group of the formula: -CH₂- or the following formula: 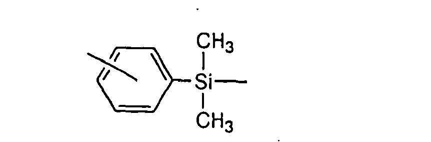 and R is as defined above,
"a" is independently 0 or 1,
Rf is a divalent group of the general formula (i):
- CₜF₂ₜ[OCF₂CF(CF₃)]ₚOCF₂(CF₂)ᵣCF₂O[CF(CF₃)CF₂O]_{q}CₜF₂ₜ- (i)
wherein p and q each are an integer of 1 to 150, the sum of p+q is on the average 2 to 200, r is an integer of 0 to 6, and t is 2 or 3, or the general formula (ii):
-CₜF₂ₜ[OCF₂CF(CF₃)]ᵤ(OCF₂)ᵥOCₜF₂ₜ- (ii)
wherein u is an integer of 1 to 200, v is an integer of 1 to 50, and t is as defined above,
(b) a fluorinated organohydrogenpolysiloxane having at least two silicon-bonded hydrogen atoms (i.e., SiH groups) per molecule in a sufficient amount to provide 0.5 to 5.0 moles of SiH groups per mole of alkenyl groups available from component (a), and further having at least one perfluorooxyalkyl, perfluoroalkyl, perfluorooxyalkylene or perfluoroalkylene group per molecule
(c) a platinum group compound in an amount to provide 0.1 to 500 ppm of platinum group metal based on the total weight of components (a) and (b),
(d) 5 to 50 parts by weight of hydrophobic silica powder, and
(e) 0.01 to 30 parts by weight of a tackifier in the form of at least one silicon compound selected from the general formulae (I), (II), and (III):
A-(D-B)ₓ-D-A (I)
C-(B-D)ₓ-B-C (II)
A-E (III)
wherein A and B each are a silane or siloxane linkage having at least one silicon-bonded hydrogen atom and optionally a silicon-bonded substituent group, said substituent group, if present, is an unsubstituted hydrocarbon group of 1 to 20 carbon atoms , A is a monovalent linkage, B is a divalent linkage,
C, D and E each are a linkage containing at least one group selected from the following formulae (1) to (13) and optionally another group, said other group, if present, is an alkyl and/or alkylene group, C and E are monovalent linkages and D is a divalent linkage, with the proviso that E is a monovalent linkage in which the total number of atoms other than hydrogen and halogen atoms is at least 8,
x is 0 or a positive number, 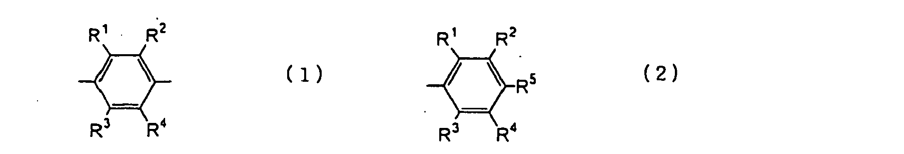 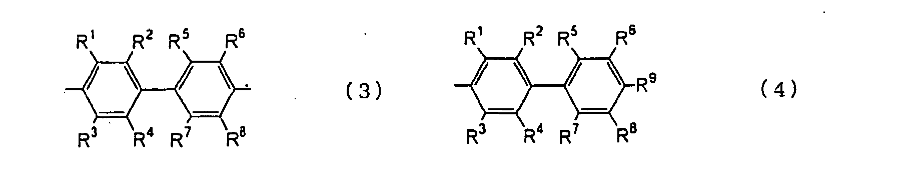 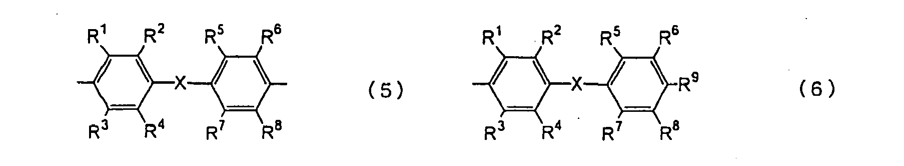 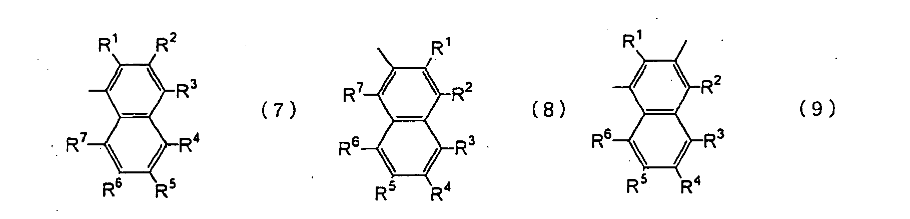 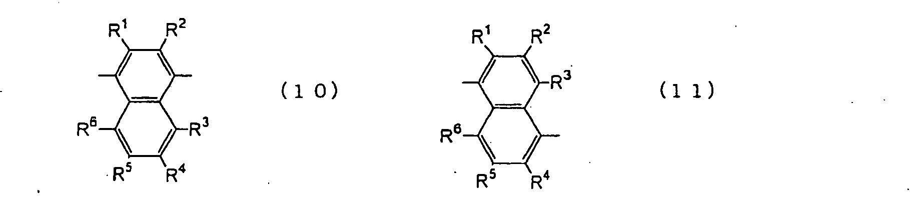 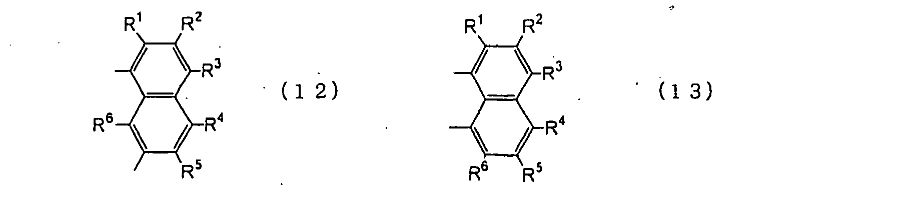 wherein R¹ to R⁹ are each independently a monovalent group selected from the class consisting of hydrogen, halogen, hydroxyl, unsubstituted monovalent hydrocarbon or alkoxy groups of 1 to 20 carbon atoms,
X is a divalent group represented by the formula: 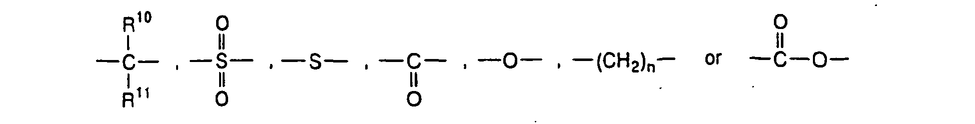 wherein R¹⁰ to R¹¹ are each independently selected from the class consisting of hydrogen, halogen, unsubstituted monovalent hydrocarbon groups of 1 to 20 carbon atoms, or R¹⁰ to R¹¹, taken together, may form a carbocyclic or heterocyclic ring, and "n" is an integer of at least 2.

2. The composition of claim 1, wherein the tackifier (e) exhibits a contact angle of up to 70° on an organic resin as an adherend.

3. A molded rubber article obtained by integral molding of an organic resin and a cured rubber product of the curable fluoropolyether composition of any one of claims 1 to 2.

4. An integral molded resin/rubber article comprising the molded rubber article of claim 3 which is for use in automobiles as diaphragms such as fuel regulator diaphragms, pulsation damper diaphragms, oil pressure switch diaphragms, and EGR diaphragms, valves such as canister valves and power control valves, O-rings such as quick connector O-rings and injector O-rings, or seals such as oil seals and cylinder head gaskets.

5. An integral molded resin/rubber article comprising the molded rubber article of claim 3 which is for use in chemical plants as pump diaphragms, valves, O-rings, packings, oil seals, or gaskets.

6. An integral molded resin/rubber article comprising the molded rubber article of claim 3 which is for use in ink jet printers and semiconductor manufacturing lines as diaphragms, valves, O-rings, packings, or gaskets.

7. An integral molded resin/rubber article comprising the molded rubber article of claim 3 which is for use in analytical and scientific instruments and medical equipment as pump diaphragms, O-rings, packings, valves, or joints .

8. An integral molded resin/rubber article comprising the molded rubber article of claim 3 which is for use as tent coating materials, molded parts, extruded parts, coats, copier roll materials, electrical moisture-proof coatings, laminate rubber fabrics, fuel cell gaskets, or seals .

9. An integral molded resin/rubber article comprising the molded rubber article of claim 3 which is for use in aircraft as O-rings, face seals, packings, gaskets, diaphragms, valves or the like in fluid piping for engine oil, jet fuel, hydraulic oil, or Skydrol®.

## Patentansprüche

1. Härtbare Fluorpolyether-Zusammensetzung umfassend
(a) 100 Gewichtssteile einer Polyfluordialkenylverbindung mit Alkenylgruppen an beiden Enden der Molekülkette, durch die allgemeine Formel (14) dargestellt:
CH₂=CH-(Z)ₐ-Rf-(Z')ₐ-CH=CH₂ (14)
wobei Z eine zweiwertige Gruppe der Formel: -CH₂-, -CH₂O-, -CH₂OCH₂- oder -Y-NR-CO- ist, wobei Y eine zweiwertige Gruppe der Formel: -CH₂- oder folgender Formel: 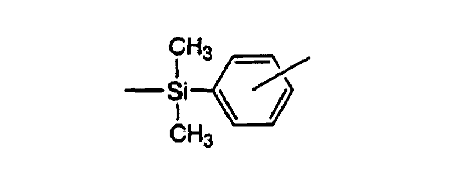 ist und R Wasserstoff oder eine substituierte oder unsubstituierte einwertige Kohlenwasserstoffgruppe ist,
Z' eine zweiwertige Gruppe der Formel: -CH₂-, -OCH₂-, -CH₂OCH₂- oder -CO-NR-Y'-ist, wobei Y' eine zweiwertige Gruppe der Formel: -CH₂- oder folgender Formel: 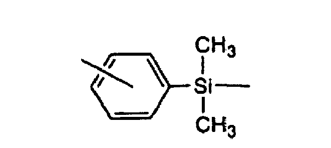 ist und R wie oben definiert ist, "a" unabhängig 0 oder 1 ist,
Rf eine zweiwertige Gruppe der allgemeinen Formel (i):
-CₜF₂ₜ[OCF₂CF(CF₃)]ₚOCF₂(CF₂)ᵣCF₂O[CF(CF₃)CF₂O]_{q}CₜF₂ₜ- (i)
ist, wobei p und q jeweils eine ganze Zahl von 1 bis 150 sind, die Summe von p+q im Durchschnitt 2 bis 200 ist, r eine ganze Zahl von 0 bis 6 ist und t 2 oder 3 ist oder der allgemeinen Formel (ii):
-CₜF₂ₜ[OCF₂CF(CF₃)]ᵤ(OCF₂)ᵥOCₜF₂ₜ- (ii)
ist,
wobei u eine ganze Zahl von 1 bis 200 ist, v eine ganze Zahl von 1 bis 50 ist und t wie oben definiert ist,
(b) ein fluoriertes Organohydrogenpolysiloxan mit mindestens zwei Silizium gebundenen Wasserstoffatomen (d. h. SiH-Gruppen) pro Molekül in ausreichender Menge, um 0,5-5,0 mol SiH-Gruppen pro mol Alkenylgruppen, erhältlich aus Bestandteil (a), bereitzustellen, und des weiteren mit mindestens einer Perfluoroxyalkyl-, Perfluoralkyl-, Perfluoroxyalkylen- oder Perfluoralkylengruppe pro Molekül,
(c) eine Platingruppenverbindung in einer Menge, um 0,1 bis 500 ppm eines Platingruppenmetalls, bezogen auf das Gesamtgewicht der Bestandteile (a) und (b), bereitzustellen,
(d) 5 bis 50 Gewichtsteile eines hydrophoben Kieselsäurepulvers, und
(e) 0,01 bis 30 Gewichtsteile eines Klebrigmachers in Form von mindestens einer Siliziumverbindung, ausgewählt aus den allgemeinen Formeln (I), (II) und (III):
A-(D-B)ₓ-D-A (I)
C-(B-D)ₓ-B-C (II)
A-E (III)
wobei A und B jeweils eine Silan- oder Siloxanbindung mit mindestens einem Silizium gebundenen Wasserstoffatom und wahlweise einer Silizium gebundenen Substituentengruppe sind, genannte Substituentengruppe, falls vorhanden, eine unsubstituierte Wasserstoffgruppe von 1 bis 20 Kohlenstoffatomen ist, A eine einwertige Bindung ist, B eine zweiwertige Bindung ist, C, D und E jeweils eine Bindung sind, die mindestens eine Gruppe, ausgewählt aus den folgenden Formeln (1) bis (13) enthalten und wahlweise eine andere Gruppe, genannte andere Gruppe, falls vorhanden, eine Alkyl- und/oder Alkylengruppe ist, C und E einwertige Bindungen sind und D eine zweiwertige Bindung ist, mit der Maßgabe, dass E eine einwertige Bindung ist, in der die Gesamtzahl der Atome, neben Wasserstoff und Halogenatomen, mindestens 8 ist, x 0 oder eine positive Zahl ist, 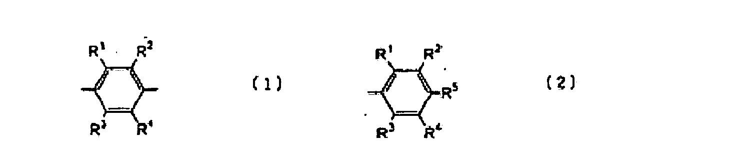 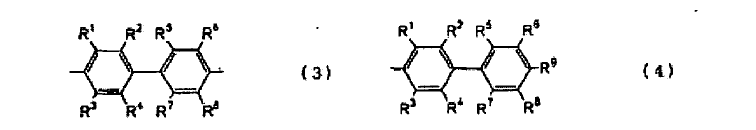 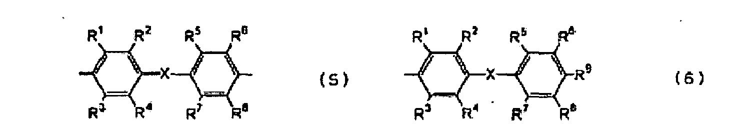 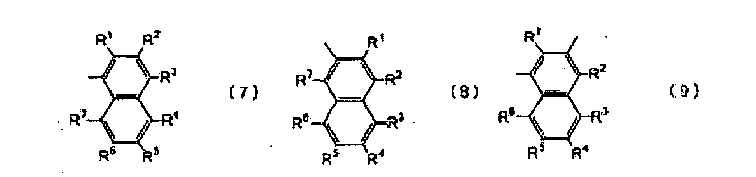 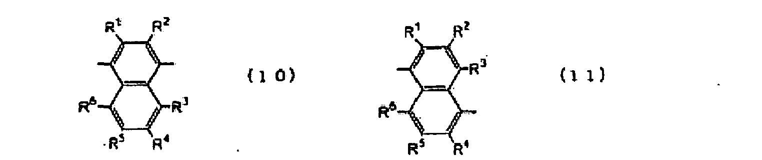 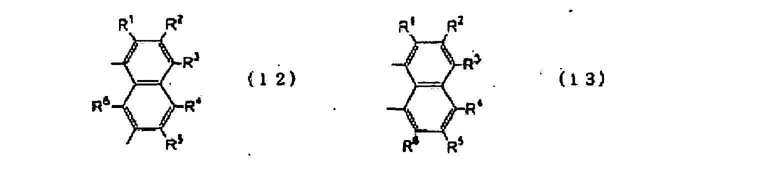 wobei R¹ bis R⁹ jeweils unabhängig voneinander eine einwertige Gruppe sind, ausgewählt aus der Klasse, bestehend aus Wasserstoff, Halogen, Hydroxyl, unsubstituierten einwertigen Kohlenwasserstoff- oder Alkoxygruppen von 1 bis 20 Kohlenstoffatomen, X eine zweiwertige Gruppe ist, dargestellt durch die Formel: 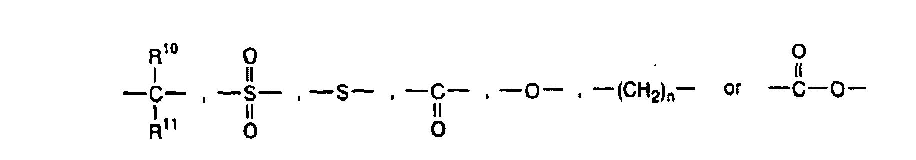 wobei R¹⁰ bis R¹¹ jeweils unabhängig voneinander ausgewählt sind aus der Klasse, bestehend aus Wasserstoff, Halogen, unsubstituierten einwertigen Kohlenwasserstoffgruppen von 1 bis 20 Kohlenstoffatomen, oder R¹⁰ bis R¹¹, zusammengenommen, einen carbocyclischen oder heterocyclischen Ring bilden können und "n" eine ganze Zahl von mindestens 2 ist.

2. Zusammensetzung nach Anspruch 1, wobei der Klebrigmacher (e) einen Kontaktwinkel von bis zu 70° auf einem organischen Harz als eine Klebefläche aufweist.

3. Geformtes Gummiprodukt, erhalten durch Integralformen eines organischen Harzes und eines gehärteten Gummiprodukts der härtbaren Fluorpolyetherzusammensetzung eines der Ansprüche 1 bis 2.

4. Integralgeformtes Harz-/Gummi-Produkt, das das geformte Gummiprodukt von Anspruch 3 umfasst, das für die Verwendung in Automobilen als Diaphragmen, wie Ölregulatordiaphragmen, Pulsationsdämpferdiaphragmen, Öldruckschalterdiaphragmen und EGR-Diaphragmen, Ventile, wie Kanisterventile und Kraftkontrollventile, O-Ringe, wie Schnellanschluss-O-Ringe und Einspritzdüsen-O-ringe, oder Dichtungen, wie Öldichtungen und Zylinderkopfabdichtungen, ist.

5. Integralgeformtes Harz-/Gummiprodukt, das das geformte Gummiprodukt von Anspruch 3 umfasst, das für die Verwendung in chemischen Anlagen als Pumpdiaphragmen, Ventile, O-Ringe, Verdichtungen, Ölabdichtungen oder Dichtungen ist.

6. Integralgeformtes Harz-/Gummiprodukt, das das geformte Gummiprodukt von Anspruch 3 umfasst, das für die Verwendung in Tintenstrahldruckern und Halbleiterfertigungslinien als Diaphragmen, Ventile, O-Ringe, Verdichtungen oder Dichtungen ist.

7. Integralgeformtes Harz-/Gummiprodukt, das das geformte Gummiprodukt von Anspruch 3 umfasst, das für die Verwendung in analytischen und wissenschaftlichen Instrumenten und medizinischer Ausrüstung als Pumpdiaphragmen, O-Ringe, Verdichtungen, Ventile oder Gelenke ist.

8. Integralgeformtes Harz-/Gummiprodukt, das das geformte Gummiprodukt von Anspruch 3 umfasst, das für die Verwendung als Zeltbeschichtungsmaterialien, geformte Teile, extrudierte Teile, Jacken, Kopierrollenmaterialien, elektrische feuchtigkeitsbeständige Beschichtungen, Laminat-Gummi-Textilwaren, Brennstoffzellendichtungen oder Abdichtungen ist.

9. Integralgeformtes Harz-/Gummiprodukt, das das geformte Gummiprodukt von Anspruch 3 umfasst, das für die Verwendung in Flugzeugen als O-Ringe, Gleitringabdichtungen, Verdichtungen, Dichtungen, Diaphragmen, Ventile oder Ähnliches in flüssigen Rohrleitungen für Maschinenöl, Düsenmaschinentreibstoff, hydraulisches Öl oder Skydrol^{®} ist.

## Revendications

1. Composition durcissable à base de polyéther fluoré, comprenant :
a) 100 parties en poids d'un composé de type polyfluoro-dialcène dont la molécule comporte des groupes alcényle aux deux extrémités de la chaîne et qui est représenté par la formule générale (14) :
CH₂=CH-(Z)ₐ-Rf-(Z')ₐ-CH=CH₂ (14)
dans laquelle
Z représente un groupe divalent de formule -CH₂-, -CH₂O-, -CH₂OCH₂- ou -Y-NR-CO- où Y représente un groupe divalent de formule -CH₂- ou de formule suivante : 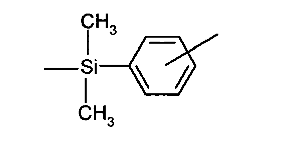 et R représente un atome d'hydrogène ou un groupe hydrocarbyle monovalent avec ou sans substituant(s),
Z' représente un groupe divalent de formule -CH₂-, -OCH₂-, -CH₂OCH₂- ou -CO-NR-Y'- où Y' représente un groupe divalent de formule -CH₂- ou de formule suivante : 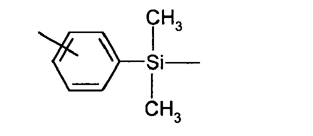 et R a la signification indiquée ci-dessus,
les indices "a" valent chacun, indépendamment, 0 ou 1,
et Rf représente un groupe divalent, de formule générale (i) :
-CₜF₂ₜ[OCF₂CF(CF₃)]ₚOCF₂(CF₂)ᵣCF₂O[CF(CF₃)CF₂O]_{q}CₜF₂ₜ- (i)
où les indices p et q sont des nombres entiers valant chacun de 1 à 150, dont la somme p+q vaut en moyenne de 2 à 200, l'indice r est un nombre entier valant de 0 à 6 et l'indice t vaut 2 ou 3,
ou de formule générale (ii) :
-CₜF₂ₜ[OCF₂CF(CF₃)]ᵤ(OCF₂)ᵥOCₜF₂ₜ- (ii)
où l'indice u est un nombre entier valant de 1 à 200, l'indice v est un nombre entier valant de 1 à 50, et l'indice t à la valeur indiquée ci-dessus ;
b) un organo-hydrogéno-polysiloxane fluoré, qui comporte des atomes d'hydrogène liés à des atomes de silicium, c'est-à-dire des groupes SiH, à raison d'au moins deux par molécule et en un nombre suffisant pour apporter de 0,5 à 5,0 moles de groupes SiH par mole de groupes alcényle disponibles dans le composant (a), et qui comporte en outre, par molécule, au moins un groupe perfluorooxyalkyle, perfluoroalkyle, perfluorooxyalcanediyle ou perfluoroalcanediyle ;
c) un composé d'un métal de la mine du platine, en une quantité apportant de 0,1 à 500 ppm de métal de la mine du platine, par rapport au poids total des composants (a) et (b) ;
d) de 5 à 50 parties en poids de silice hydrophobe en poudre ;
e) et de 0,01 à 30 parties en poids d'un agent poisseux qui se présente sous la forme d'au moins un composé de type silicone, choisi parmi ceux de formules générales (I), (II) et (III) :
A-(D-B)ₓ-D-A (I)
C-(B-D)ₓ-B-C (II)
A-E (III)
dans lesquelles
A et B représentent chacun un fragment de type silane ou siloxane, comportant au moins un atome d'hydrogène lié à un atome de silicium et en option, un substituant lié à un atome de silicium, lequel substituant, s'il est présent, est un groupe hydrocarbyle sans substituant, comportant de 1 à 20 atomes de carbone, et A représente un fragment monovalent alors que B représente un fragment divalent,
et C, D et E représentent chacun un fragment comportant au moins un groupe choisi parmi ceux de formules suivantes (1) à (13), et en option, un autre groupe qui, s'il est présent, est un groupe alkyle ou alcane-diyle, et C et E représentent des fragments monovalents alors que D représente un fragment divalent, sous réserve que E représente un fragment monovalent dans lequel il y a en tout au moins huit atomes autres que des atomes d'hydrogène et d'halogène,
et l'indice x est un nombre positif ou nul ; 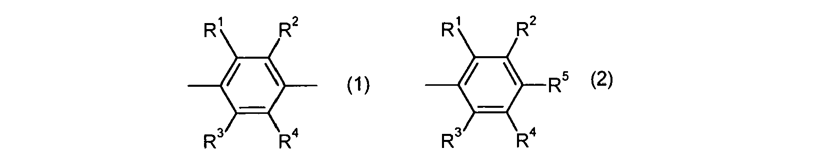 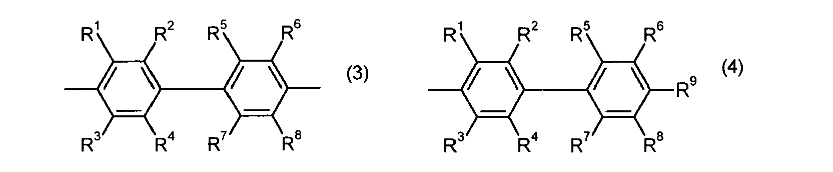 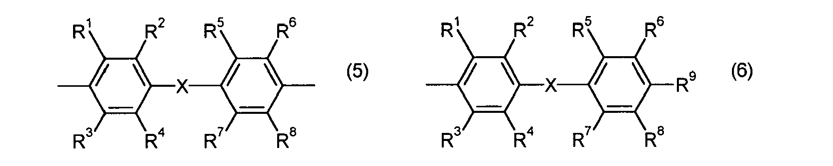 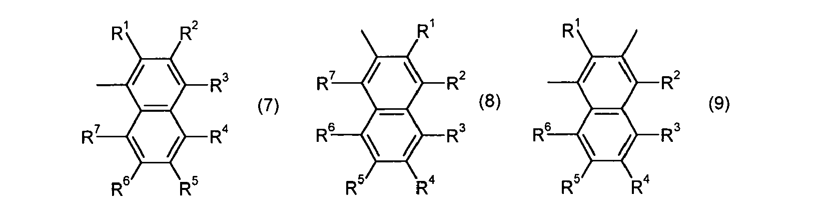 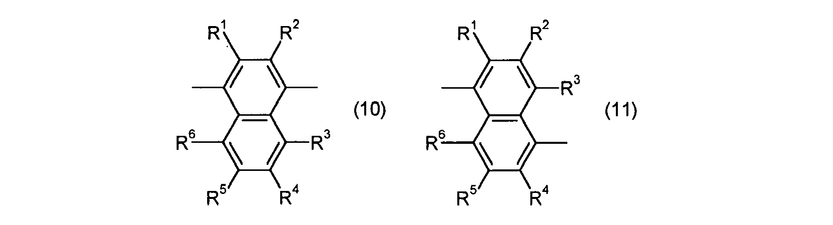 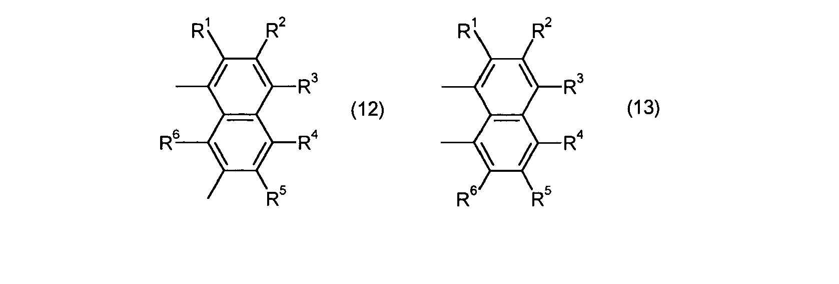 formules dans lesquelles
les symboles R¹ à R⁹ représentent chacun, indépendamment, une entité monovalente choisie dans l'ensemble formé par les atomes d'hydrogène et d'halogène, le groupe hydroxyle et les groupes hydrocarbyle ou alcoxy monovalents, sans substituant et comportant 1 à 20 atomes de carbone,
et X représente un groupe ou un chaînon divalent, représenté par l'une des formules suivantes : 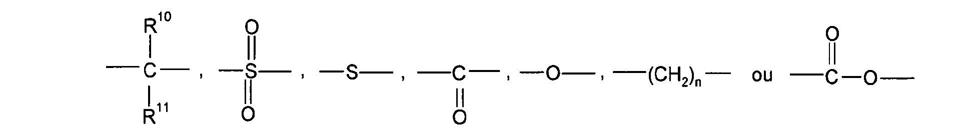 dans lesquelles R¹⁰ et R¹¹ représentent chacun, indépendamment, une entité monovalente choisie dans l'ensemble formé par les atomes d'hydrogène et d'halogène et les groupes hydrocarbyle monovalents, sans substituant et comportant 1 à 20 atomes de carbone, ou bien R¹⁰ et R¹¹ représentent des entités qui forment conjointement un groupe carbo-cyclique ou hétérocyclique, et l'indice n est un nombre entier qui vaut au moins 2.

2. Composition conforme à la revendication 1, dans laquelle l'agent poisseux (e) est un agent qui, comme adhérent sur une résine organique, présente un angle de contact valant jusqu'à 70°.

3. Article en caoutchouc moulé, obtenu par moulage tout d'une pièce d'une résine organique et d'un produit de type caoutchouc obtenu par durcissement d'une composition durcissable à base de polyéther fluoré, conforme à l'une des revendications 1 et 2.

4. Article en résine/caoutchouc moulé tout d'une pièce, comprenant un article en caoutchouc moulé conforme à la revendication 3, et destiné à être employé dans des automobiles en tant que diaphragme, comme les diaphragmes de régulateur de débit de carburant, les diaphragmes d'amortisseur de pulsations, les diaphragmes de commutateur de pression d'huile et les diaphragmes de système de recirculation des gaz d'échappement, en tant que vanne, comme les vannes de réservoir et les vannes de commande de puissance, en tant que joint torique, comme les joints toriques de raccord rapide et les joints toriques d'injecteur, ou en tant que joint d'étanchéité, comme les joints étanches à l'huile et les joints de culasse.

5. Article en résine/caoutchouc moulé tout d'une pièce, comprenant un article en caoutchouc moulé conforme à la revendication 3, et destiné à être employé dans des installations chimiques sous forme de diaphragmes de pompe, de vannes, de joints toriques, de garnitures, de joints étanches à l'huile ou de joints.

6. Article en résine/caoutchouc moulé tout d'une pièce, comprenant un article en caoutchouc moulé conforme à la revendication 3, et destiné à être employé dans des imprimantes à jet d'encre ou dans des lignes de fabrication de semiconducteurs sous forme de diaphragmes, de vannes, de joints toriques, de garnitures ou de joints.

7. Article en résine/caoutchouc moulé tout d'une pièce, comprenant un article en caoutchouc moulé conforme à la revendication 3, et destiné à être utilisé dans des instruments d'analyse, des instruments scientifiques ou des appareils médicaux sous forme de diaphragmes de pompe, de joints toriques, de garnitures, de vannes ou de joints.

8. Article en résine/caoutchouc moulé tout d'une pièce, comprenant un article en caoutchouc moulé conforme à la revendication 3, et destiné à être employé sous forme de matériaux de revêtement de tente, de pièces moulées, de pièces extrudées, de revêtements, de matériaux de rouleaux de copieur, de revêtements étanches à l'humidité pour appareils électriques, de stratifiés tissu/caoutchouc, de joints de pile à combustible ou de joints d'étanchéité.

9. Article en résine/caoutchouc moulé tout d'une pièce, comprenant un article en caoutchouc moulé conforme à la revendication 3, et destiné à être employé dans des avions sous forme de joints toriques, de joints d'étanchéité, de garnitures, de joints, de diaphragmes, de vannes ou similaires dans des canalisations pour fluides tels qu'une huile moteur, un combustible pour moteur à réaction, une huile hydraulique ou un produit de marque Skydrol^{®}.
